# EUROPÄISCHE PATENTANMELDUNG

(11) **EP 4 609 935 A1**
(43) Veröffentlichungstag der Anmeldung: **03.09.2025**
(21) Anmeldenummer: 25159734.0
(22) Anmeldetag: 24.02.2025
(51) Int. Cl.: B01D 46/00, B01D 46/44, B01D 46/58, B01D 46/62

(54) **AEROSOLFILTER**

(30) Priorität: 28.02.2024 AT 501712024
(71) Anmelder: Aigner GmbH, 4623 Gunskirchen (AT)
(72) Erfinder: Kraus, Helmut, 4053 Moos/Ansfelden (AT)
(74) Vertreter: Fabian, Ferdinand

(57) **Zusammenfassung**

Die Erfindung betrifft ein Aerosolfilter (1) umfassend ein Filtermodul (2) mit einem Gehäuse (3), das einen Einlass (8) für ein verunreinigtes gasförmiges Medium und einen Auslass (9) für ein gereinigtes gasförmiges Medium aufweist, wobei zwischen dem Einlass (8) und dem Auslass (9) zumindest ein Filterelement (10) zur Abscheidung eines Feststoffes oder einer Flüssigkeit aus dem gasförmigen Medium angeordnet ist, sowie mit einer Zuführeinrichtung (13) zur Zuführung des verunreinigten gasförmigen Mediums und einer Abführeinrichtung (14) zur Abführung des gasförmigen Mediums. Zwischen der Zuführeinrichtung (13) für die Zuführung des verunreinigten gasförmigen Mediums und der Abführeinrichtung (14) zur Abführung des gasförmigen Mediums sind übereinander und/oder nebeneinander mehrere der Filtermodule (2) angeordnet.

## Beschreibung

Die Erfindung betrifft einen Aerosolfilter umfassend ein Filtermodul mit einem Gehäuse, das einen Einlass für ein verunreinigtes gasförmiges Medium und einen Auslass für eine gereinigtes gasförmiges Medium aufweist, wobei zwischen dem Einlass und dem Auslass zumindest ein Filterelement zur Abscheidung einer Flüssigkeit aus dem gasförmigen Medium angeordnet ist, sowie mit einer Zuführeinrichtung zur Zuführung des verunreinigten gasförmigen Mediums und einer Abführeinrichtung zur Abführung des gasförmigen Mediums.

Aus verschiedensten Gründen wird Luft bzw. generell ein Gas mit Ölen verunreinigt. Aus dem täglichen Leben ist dies beispielsweise bei Kraftfahrzeugen mit Verbrennungsmotoren bekannt, in denen sogenannte Ölnebelfilter zur Abluftreinigung eingesetzt werden. Aber auch in industriellen Anlagen tritt das Problem "Ölnebel" auf. Zur Lösung dieses Problems ist z.B. aus der DD 290 359 A5 ein kombinierter Baustein zur Luftförderung und Abscheidung von Ölnebel aus ölnebelbelasteter Fortluft in großen Industriehallen bekannt, umfassend ein zweiteilig ausgebildetes zylindrisches Gehäuse, bestehend aus einem düsenförmig gestalteten Oberteil, der mit einem nach oben offenen Luftaustritt und einem mit einer axialen Ansaugöffnung versehenen Unterteil verbunden ist, welches einen Radialdachventilator in sich aufnimmt, der von einem Ölfangring umgeben ist, wobei der Luftstrom axial im Unterteil eintritt, im Bereich des Radialdachventilators radial den Ölfangring mit hoher Geschwindigkeit durchströmt und nach vertikaler Umlenkung aus dem Oberteil austritt.

Die DE 195 21 267 A1 beschreibt eine Presse, die einen Antriebskolben aufweist, um den eine Dichtung angeordnet ist, um eine Migration von Öl vom Antriebskolben zu einem Schlitten der Presse zu verhindern. Um die Dichtung ist eine Ölkontrollvorrichtung angeordnet ist, die einen durch eine Luftströmung erzeugten Unterdruck enthält, um Leckageöl aus der Dichtung vom Antriebskolben zusammen mit dem Luftstrom abzusaugen, wobei ein Ölnebelfilter vorgesehen ist, durch welchen der Luftstrom hindurchtritt, und der das mitgeschleppte Öl koalisiert und dabei das Öl vom Luftstrom im Wesentlichen abtrennt.

Der vorliegenden Erfindung liegt die Aufgabe zu Grunde, einen Aerosolfilter mit verbesserten Einsatzmöglichkeiten zu schaffen.

Die Aufgabe der Erfindung wird bei dem eingangs genannten Aerosolfilter dadurch gelöst, dass zwischen der Zuführeinrichtung für die Zuführung des verunreinigten gasförmigen Mediums und der Abführeinrichtung zur Abführung des gasförmigen Mediums übereinander und/oder nebeneinander mehrere der Filtermodule miteinander strömungsverbunden angeordnet sind.

Für die Luftreinigung werden in der Regel in Produktionshallen große Anlagen eingesetzt, die eine entsprechend hohe Volumenstromkapazität haben. Mit dem erfindungsgemäßen Aerosolfilter ist es auf einfache Weise möglich, diesen an Orten aufzustellen, die in Betrieben "minderwertige" da kaum Platz bietende Abstellflächen sind. Durch die Modularität des Filters kann dieser einfach an die Anforderungen skaliert werden, indem eine entsprechende Anzahl an Filtermodulen übereinander und/oder nebeneinander platziert wird. Dabei kann die Aufstellung auch mit einer Redundanz erfolgen, um die Filtermodule abwechselnd betreiben zu können. Die Modularität der Filtermodule ermöglicht bei geringeren Kapazitätsanforderungen auch einen Rückbau des Filters, ohne dass der gesamte Filter getauscht werden muss.

Nach einer Ausführungsvariante der Erfindung kann vorgesehen sein, dass zwischen Filtermodulen eine Leitvorrichtung für die Mediumleitung angeordnet ist. Es ist damit eine einfache Verteilung des verunreinigten gasförmigen Mediums auf mehrere Filtermodule erreichbar.

Gemäß einer Ausführungsvariante dazu kann vorgesehen sein, dass die Leitvorrichtung in einem Leitvorrichtungsgehäuse und dieses in mehrere voneinander getrennte Strömungswege unterteilend angeordnet ist. Zusätzlich zu dem voranstehend genannten Effekt kann damit auch eine einfache Möglichkeit der Herstellung der Strömungsverbindung zwischen zwei oder mehreren Filtermodulen erreicht werden.

Entsprechend einer weiteren Ausführungsvariante der Erfindung kann in zumindest einem der Gehäuse der Filtermodule ein an dem zumindest einen Filterelement vorbeiführender Strömungskanal angeordnet oder ausgebildet sein, mit dem ein Teil des verunreinigten Mediums in ein an dieses Filtermodul anschließendes Filtermodul geleitet wird. Es ist damit eine einfachere Ausbildung der Zuführeinrichtung und der Abführeinrichtung möglich, indem diese jeweils nur an einem der Filtermodule angeordnet werden müssen, d.h. dass jeweils nur eines von zumindest zwei Filtermodulen einen mit der Zuführeinrichtung verbundenen Einlass für das verunreinigte Medium und ein anderes der zumindest zwei Filtermodule den mit der Auslasseinrichtung verbundenen Auslass für das gereinigte Medium aufweisen müssen.

Zur einfacheren Strömungsführung des gasförmigen Mediums zwischen den Filtermodulen kann nach einer weiteren Ausführungsvariante der Erfindung vorgesehen sein, dass die Filterelemente von übereinander angeordneten Filtermodulen in horizontaler Richtung versetzt zueinander angeordnet sind.

Zur Vereinfachung der Einbindung des Aerosolfilters in eine Luftreinigungsanlage ist es von Vorteil, wenn nach einer Ausführungsvariante der Erfindung für sämtliche Filtermodule nur eine einzige Zuführeinrichtung für die Zuführung des verunreinigten gasförmigen Mediums und nur eine einzige Abführeinrichtung zur Abführung des gasförmigen Mediums angeordnet ist.

Ebenfalls zur Vereinfachung der Strömungsführung und um weitere Geräte bzw. Apparate, wie z.B. einen Wärmetauscher, einfacher an ein Filtermodul oder den Aerosolfilter anschließen zu können kann nach einer Ausführungsvariante der Erfindung vorgesehen sein, dass bei sämtlichen Filtermodulen der Einlass für das verunreinigte gasförmige Medium unterhalb des zumindest einen Filterelements und der Auslass für das gereinigte gasförmige Medium oberhalb des zumindest einen Filterelements angeordnet ist.

Zur Erhöhung der Filterkapazität bzw. zur Erhöhung des Reinheitsgrades des gereinigten gasförmigen Mediums kann gemäß einer Ausführungsvariante der Erfindung vorgesehen sein, dass mehrere der oder alle Filtermodule mehrere Filterelemente aufweisen, die nebeneinander und/oder übereinander angeordnet sind.

Eine Vereinfachung der Servicierbarkeit kann erreicht werden, wenn entsprechend einer Ausführungsvariante der Erfindung an zumindest einem der Filtermodule ein Messpunkt mit einem Sensor zur Messung eines Betriebsparameters angeordnet ist, wobei der Messpunkt einen Anschluss für ein Service Messgerät aufweist. Es ist damit möglich, den Betriebsparameter durch einfaches Anstecken eines Lesegerätes vor Ort während eines Services oder zur Auffindung eines Fehlers auszulesen, ohne dass in das Filtermodul oder den Aerosolfilter an sich eingegriffen werden muss bzw. dieses/dieser zerlegt werden muss.

Zur weiteren Verbesserung dieses Effekts kann nach einer Ausführungsvariante dazu vorgesehen sein, dass an zumindest einem weiteren Filtermodul zumindest ein Messpunkt mit einem Sensor zur Messung eines Betriebsparameters angeordnet ist, wobei der Messpunkt einen Anschluss für ein Service Messgerät aufweist und wobei die Anschlüsse für die Service Messgeräte in einem gemeinsamen Bereich des Aerosolfilters angeordnet sind.

Zum besseren Verständnis der Erfindung wird diese anhand der nachfolgenden Figur näher erläutert.

Es zeigen jeweils in vereinfachter, schematischer Darstellung:
- Fig. 1: Ein Aerosolfilter in Ansicht von vorne;
- Fig. 2: Der Aerosolfilter nach Fig. 1 in Seitenansicht;
- Fig. 3: Der Aerosolfilter nach Fig. 1 in Explosionsdarstellung;
- Fig. 4: Eine Ausführungsvariante des Aerosolfilters in Schrägansicht;
- Fig. 5: Eine Servicemessstelle;
- Fig. 6: Eine Ausführungsvariante von Servicemessstellen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

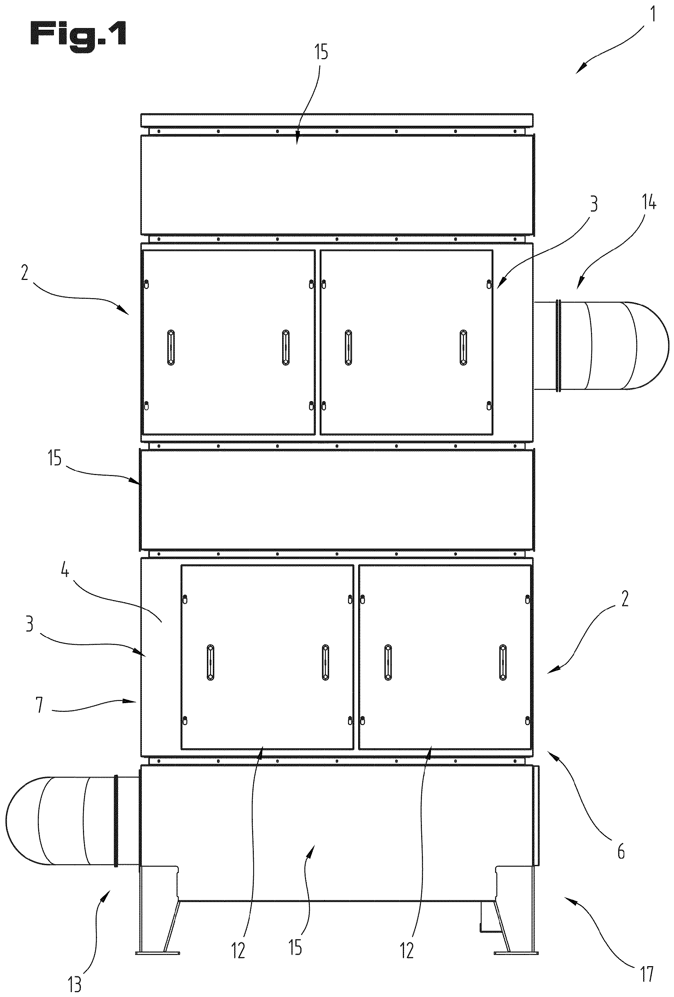

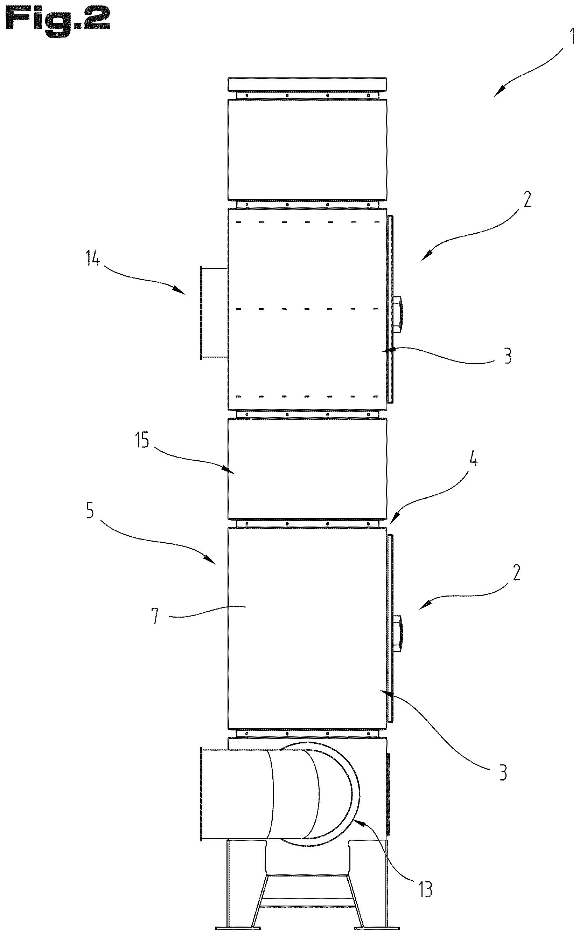

In den Fig. 1 bis 3 ist eine erste Ausführungsvariante eines Aerosolfilter 1 dargestellt.

Ein Aerosolfilter 1 im Sinne der Erfindung ist eine Vorrichtung, mit der ein Gemisch aus festen oder insbesondere flüssigen Bestandteilen und einem gasförmigen Medium (also die Bestandteile eines Aerosols) voneinander zumindest anteilsweise getrennt werden können. In der bevorzugten Ausführungsvariante ist der Aerosolfilter 1 ein Ölnebelfilter. Der Aerosolfilter 1 kann aber auch zur zumindest anteiligen Trennung von einem anderen Aerosol eingesetzt werden.

Mit "anteilsweise" bzw. "anteilig" ist angesprochen, dass die Trennung nicht zu 100 % erfolgen muss. Es kann aber vorgesehen sein, dass z.B. nach einem Vorfilter ein Feinfilter in dem Aerosolfilter 1 kombiniert ist.

Der Aerosolfilter 1 bzw. der Ölnebelfilter kann z.B. für den Einsatz in einer Produktionshalle an einer Maschine bzw. zur Reinigung der Abluft bzw. Luft in einer Produktionshalle vorgesehen sein.

Der Aerosolfilter 1 ist modular aufgebaut und umfasst zumindest zwei bzw. mehrere Filtermodule 2. Zumindest zwei bzw. mehrere oder alle der Filtermodule 2 weisen ein Gehäuse 3 auf. Die Gehäuse 3 weisen zumindest einen Gehäusemantel auf. D.h., dass die Gehäuse 3 unten und oben offen sein können, also nicht zwingend einen Gehäuseboden und einen Gehäusedeckel aufweisen. Die Gehäuse 3 können zumindest teilweise aus einem polymeren Kunststoff oder aus einem metallischen Werkstoff oder einer Werkstoffkombination daraus gebildet sein, wobei diese Aufzählung die Erfindung nicht beschränkend zu verstehen ist.

Die Gehäusemäntel umfassen eine Vorderwand 4, eine Rückwand 5 und zwei Seitenwände 6, 7 bzw. bestehen daraus.

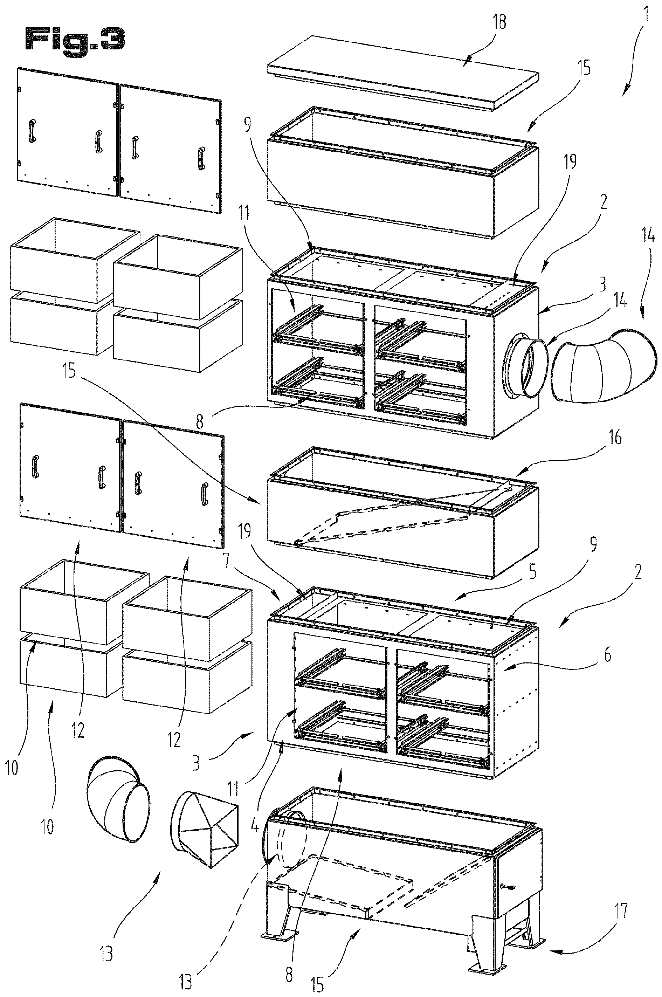

Zumindest zwei, vorzugsweise sämtliche, Gehäuse 3 weisen zumindest einen Einlass 8 für ein verunreinigtes gasförmiges Medium (im Folgenden nur mehr als Einlass 8 bezeichnet) und zumindest einen Auslass 9 für ein gereinigtes gasförmiges Medium (im Folgenden nur mehr als Auslass 8 bezeichnet) auf. Diese Einlässe 8 sind vorzugsweise an der Unterseite und diese Auslässe 9 sind vorzugsweise an der Oberseite der Gehäuse 3 angeordnet, wie dies aus Fig. 3 zu ersehen ist.

Das gasförmige Medium (auch als gasförmiges Fluid bezeichenbar) ist insbesondere Luft, kann aber auch ein anderes gasförmiges Medium sein.

Zwischen den Einlässen 8 und den Auslässen 9 ist zumindest ein Filterelement 10 (auch als Abscheideelement bezeichenbar) zur Abscheidung einer Flüssigkeit aus dem gasförmigen Medium (im Folgenden nur mehr als Filterelement 10 bezeichnet) angeordnet. In der dargestellten Ausführungsvariante weisen die Filtermodule 2 jeweils vier Filterelemente 10 auf, wobei jeweils zwei übereinander angeordnet sind, sodass das zu reinigende gasförmige Medium durch jeweils zwei Filterelemente 10 strömen muss bevor es zum Auslass 9 gelangt.

Es kann auch eine von vier unterschiedliche Anzahl an Filterelementen 10 pro Filtermodul 2 vorgesehen sein, beispielsweise nur zwei oder sechs oder acht, etc., wobei sich deren Anzahl auch nach dem gewünschten Reinheitsgrad des gereinigten gasförmigen Mediums richten kann.

Die Filterelemente 10 können dem Stand der Technik entsprechend ausgebildet sein. Beispielsweise können die Filterelemente 10 gitterförmig aus einem Metallgitter, oder mit Poren, z.B. als Schaumstofffilter, etc., oder als Drainagefilter, die ein lagig eingebrachtes Vlies mit Aluminium Trennblechen aufweisen, ausgebildet sein. Es können auch mehrere unterschiedliche Filter bzw. Abscheider miteinander kombiniert werden, um den Reinheitsgrad des gereinigten gasförmigen Mediums zu erhöhen. Beispielsweise kann (insbesondere unterhalb der in den Figuren 1 bis 3 gezeigten ersten Filterstufe) ein Vorfilter eingesetzt werden. Dieses kann z.B. aus einem Geflecht, Streckblech oder Porenschaum bestehen.

Die Filterelemente 10 sind vorzugsweise als Durchströmfilter ausgebildet, werden also von dem verunreinigten gasförmigen Medium zu dessen Reinigung durchströmt. Die abzuscheidenden feste oder vorzugsweise flüssige Phase verbleibt am Filterelement 10 oder kann nach dessen Koaleszenz zu größeren Flüssigkeitstropfen in einem eigenen Bereich des jeweiligen Filtermoduls 2 gesammelt und von dort abgezogen werden. Es ist auch möglich, dass die abtropfende Flüssigkeit z.B. in einer Wanne, wie beispielsweise einer Ölwanne, des Aerosolfilters 1 gesammelt wird.

Die Filterelemente 10 können in einem eigenen Filterelementgehäuse oder einem Filterelementrahmen gehalten sein. Vorzugsweise können die Filterelemente 10 werkzeuglos in die Filtermodule 2 ein- und ausgebaut werden. Beispielsweise können sie einschiebbar ausgebildet sein, wozu im Gehäuse 3 entsprechende Filterelementaufnahmen 11 angeordnet sein können, wie z.B. eine Auszughalterung in Art eines Schubladenauszugs oder in Form von Schienen oder nur als Haltewinkel oder Halteprofile, die ortsfest im jeweiligen Gehäuse 3 angeordnet sind. Entsprechende Dichtelemente, etc., können vorhanden sein, um damit nach dem Eintreten des gasförmigen Mediums über den Einlass 8 das Vorbeiströmen am jeweiligen Filterelement 10 zu verhindern. Vorzugsweise werden die Filterelementen nach dem Einschieben in das Filtermodul 2 gegen die Dichtfläche, beispielsweise nach oben, gespannt. Die Einschübe bzw. generell die Filterelementaufnahmen 11 können mit Türen 12 bzw. generell Abdeckelementen verschließbar ausgebildet sein.

Die Ausführungsvariante nach den Figuren 1 bis 3 weist zwei Filtermodule 2 auf, die übereinander angeordnet sind. Die beiden Filtermodule 2 können alternativ auch hintereinander (in Bezug auf die Vorderwand 4 und die Rückwand 5) oder nebeneinander (in Bezug auf die Seitenwände 6, 7) angeordnet sein. Bei mehr als zwei Filtermodulen 3 können diese übereinander und neben- oder hintereinander angeordnet sein.

Die Filtermodule 2 dieser Ausführungsvariante des Aerosolfilters 1 sind miteinander strömungsverbunden im Aerosolfilter 1 angeordnet.

Der Aerosolfilter 1 weist weiter eine Zuführeinrichtung 13 zur Zuführung des verunreinigten gasförmigen Mediums und einer Abführeinrichtung 14 zur Abführung des gasförmigen Mediums auf. In der einfachsten Ausführungsvariante sind die Zuführeinrichtung 13 und die Abführeinrichtung 14 lediglich Anschlusselemente, wie beispielsweise ein Rohrstutzen oder ein Flansch, etc., für den Anschluss einer Rohrleitung einer übergeordneten Luftreinigungsanlage. Die Zuführeinrichtung 13 und/oder die Abführeinrichtung 14 können aber auch Teile dieser Rohrleitungen umfassen.

Die Filtermodule 2 sind zwischen der Zuführeinrichtung 13 und der Abführeinrichtung 14 angeordnet.

Wie bereits ausgeführt, ist der Aerosolfilter 1 modulartig ausgeführt. Die Gehäuse 3 weisen alle die gleichen Abmessungen auf. Beispielsweise können die Gehäuse 3 eine Höhe zwischen 60cm und 120 cm, eine Breite zwischen 60 cm und 160 cm und eine Länge zwischen 80 cm und 300 cm aufweisen. Diese Wertebereiche dienen vorrangig der Verdeutlichung der Erfindung. Die Gehäuse 3 können auch andere Abmessungen außerhalb dieser Bereiche aufweisen, wobei die genannten Bereiche die bevorzugten sind, um den Platzbedarf des Aerosolfilters 1 gering zu halten.

Die Filtermodule 2 können direkt miteinander strömungsverbunden sein, indem sie z.B. im Bereich der Unterseite und in Bereich der Oberseite ineinander schiebbare Kragen aufweisen können, sodass z.B. ein Filtermodul 2 dichtend auf ein anderes Filtermodul 2 aufgesetzt werden kann. Andere formschlüssige Verbindungen der Filtermodule 2 miteinander sind ebenfalls möglich. Die direkte Strömungsverbindung kann auch zwischen der Rückwand 5 eines Filtermoduls 2 und der Vorderwand 4 eines weiteren Filtermoduls 2 hergestellt werden. Gegebenenfalls können noch zusätzliche Verbindungsmittel vorgesehen werden, wie z.B. Schrauben oder Spannelemente, wie z.B. Kniehebelspanner oder andersartige Spannverschlüsse, etc., mit denen die Filterelemente 10 kraftschlüssig verbunden werden.

Nach einer Ausführungsvariante des Aerosolfilter 1, die auch in den Fig. 1 bis 3 dargestellt ist, wird die Strömungsverbindung zwischen den Filtermodulen 2 über ein Leitvorrichtungsgehäuse 15 ausgebildet. In der dargestellten Ausführungsvariante ist ein Leitvorrichtungsgehäuse 15 zwischen den beiden Filtermodulen 2 angeordnet. Bei mehreren Filtermodulen 2 können auch mehrere Leitvorrichtungsgehäuse 15 zwischen jeweils zwei der Filtermodule 2 angeordnet sein.

Das dargestellte Leitvorrichtungsgehäuse 15 weist vorzugsweise äußere Abmessungen bzgl. Breite und Länge auf, die jenen der Filtermodule 2 entsprechen. Es besteht aber auch die Möglichkeit, dass das Leitvorrichtungsgehäuse 15 ein Vielfaches dieser Abmessungen aufweist, sodass beispielsweise mit einem Leitvorrichtungsgehäuse 15 vier oder acht Filtermodule 2 miteinander verbunden werden können.

Die Strömungsverbindung zwischen den Filtermodulen 2 und dem Leitvorrichtungsgehäuse 15 kann wie voranstehend zu den Filtermodulen 2 ausgeführt form- und/oder kraftschlüssig ausgebildet sein.

Das Leitvorrichtungsgehäuse 15 hat den Vorteil, dass darin gemäß einer Ausführungsvariante eine Leitvorrichtung 16 angeordnet werden kann. Die Leitvorrichtung 16 kann beispielsweise ein einfaches Blech sein, wie dies in Fig. 3 dargestellt ist. Es sei dazu angemerkt, dass zur besseren Einsehbarkeit die Vorderwand des Leitvorrichtungsgehäuses 15 in Fig. 3 nicht dargestellt ist. Das Leitvorrichtungsgehäuse 15 weist jedoch vorzugsweise einen vollumfänglich geschlossenen Gehäusemantel auf.

Die Leitvorrichtung 16 unterteilt das Leitvorrichtungsgehäuse 15 in zwei voneinander getrennte Strömungswege für das verunreinigte gasförmige Medium. Dazu kann sich die Leitvorrichtung 16 über den gesamten Querschnitt des Leitvorrichtungsgehäuses 15 erstrecken. Beispielsweise kann die Leitvorrichtung 16 von unten schräg nach oben sich erstreckend im Inneren des Leitvorrichtungsgehäuses 15 angeordnet sein.

Mit der Leitvorrichtung 16 ist es möglich das über die Zuführeinrichtung 13 zugeführte verunreinigte gasförmige Medium auf zwei voneinander unabhängige Strömungswege aufzuteilen, sodass jedes der beiden Filtermodule 2, die vor und nach der Leitvorrichtung 16 bzw. dem Leitvorrichtungsgehäuse 15 (und damit verbunden) angeordnet sind, mit dem gleichen ungereinigten gasförmigen Medium beaufschlagt werden. Es kann also mit jedem dieser beiden Filtermodule 2 ein gasförmiges Medium mit dem gleichen Reinheitsgrad erzeugt werden.

Die Fig. 1 bis 3 zeigen noch zwei weitere Leitvorrichtungsgehäuse 15, nämlich eines unterhalb des ersten Filtermoduls 2 und eines oberhalb des zweiten Filtermoduls 2. Im unteren Leitvorrichtungsgehäuse 15, das gleichzeitig der Aufstellung des Aerosolfilters 1 dient und dazu beispielsweise vier Standfüße 17 aufweist, kann aus den genannten Gründen ebenfalls eine Leitvorrichtung 16 angeordnet sein. Das oberen Leitvorrichtungsgehäuse 15 kann hingegen leer ausgebildet sein und ein Deckelelement 18 aufweisen, das den oberen Abschluss des Aerosolfilters 1 bildet.

Das untere Leitvorrichtungsgehäuse 15 kann auch als Auffanggefäß für aus den Filtermodulen 2 abtropfende Flüssigkeitstropfen, wie insbesondere Öltropfen, eingesetzt werden.

In der in den Fig. 1 bis 3 dargestellten Ausführungsvariante des Aerosolfilters 1 weisen die Filtermodule 2 jeweils einen Strömungskanal 19 auf. Dieser Strömungskanal 19 ist beispielswiese neben den Filterelementen 10 angeordnet. Der Strömungskanal 19 des unteren Filtermoduls 2 dient dazu, einen Teil des ungereinigte gasförmige Mediums, das dem unteren Filtermodul 2 zugeführt wird, an dessen Filterelementen 10 vorbei dem oberen Filtermodul 2 zur Reinigung zuzuführen. Die Leitvorrichtung 16 im Leitvorrichtungsgehäuse 15 zwischen den beiden Filtermodulen 2 verhindert dabei, dass das ungereinigte gasförmigen Medium mit dem bereits gereinigten Medium, das das untere Filtermodul 2 über dessen Auslass 9 verlässt, in Kontakt kommt.

Die Leitvorrichtung 16 ist weiter so im Leitvorrichtungsgehäuse 15 angeordnet, dass oberhalb des Auslasses 9 des unteren Filtermoduls 2 ein Strömungsweg für das gereinigte gasförmige Medium aus dem unteren Filtermodul 2 zur Abführeinrichtung 14 ausgebildet ist. Nachdem bei der dargestellten Ausführungsvariante die Abführeinrichtung 14 an dem zweiten, in diesem Fall oberen Filtermodul 2, d.h. dessen Gehäuse 3, angeordnet ist, dient der Strömungskanal 19 dieses Filtermoduls 2 der Führung des gereinigten gasförmigen Mediums. Dazu kann das obere Leitvorrichtungsgehäuse 15 oberhalb des zweiten Filtermoduls 2 der Umlenkung des aus dessen Auslass 9 austretenden gereinigten gasförmigen Mediums in den Strömungskanal 19 des zweiten Filtermoduls 2 dienen, sodass die beiden Teilströme an gereinigtem gasförmigen Medium in diesem Strömungskanal 19 vereint werden und gemeinsam den Aerosolfilter 1 über die Abführeinrichtung 14 verlassen.

Zur Vereinfachung der Konstruktion für die Ausbildung dieser Strömungsführung des gasförmigen Mediums kann nach einer weiteren Ausführungsvariante vorgesehen sein, dass die Filterelemente 10 von übereinander angeordneten Filtermodulen 2 in horizontaler Richtung versetzt zueinander angeordnet sind. Dadurch wird es möglich, dass die beiden Strömungskanäle 19 an unterschiedlichen Seitenwänden 6, 7 anschließend im jeweiligen Leitvorrichtungsgehäuse 15 angeordnet werden können. Beispielsweise ist ein unterer Strömungskanal 19 links und ein oberer Strömungskanal 19 rechts angeordnet. Generell können die Strömungskanäle 19 in horizontaler Richtung versetzt zueinander im Aerosolfilter 1 angeordnet sein.

Die Zuführeinrichtung 13 der in den Fig. 1 bis 3 dargestellten Ausführungsvariante des Aerosolfilters 1 ist im unteren Leitvorrichtungsgehäuse 15 angeordnet. Die Abführeinrichtung 14 wie ausgeführt im oberen Filtermodul 2. Im Rahmen der Erfindung können die Zuführeinrichtung 13 und/oder die Abführeinrichtung 14 auch anders angeordnet werden. Beispielsweise kann die Zuführeinrichtung 13 auch im unteren Filtermodul 2 und/oder die Abführeinrichtung 14 im oberen Leitvorrichtungsgehäuse 15 angeordnet werden. Es kann nach einer Ausführungsvariante des Aerosolfilters 1 vorgesehen sein, dass für sämtliche Filtermodule 2 nur eine einzige Zuführeinrichtung 13 für die Zuführung des verunreinigten gasförmigen Mediums und nur eine einzige Abführeinrichtung 15 zur Abführung des gasförmigen Mediums im Aerosolfilter 1 angeordnet ist. Es können aber auch jeweils zwei Zuführ- und Abführeinrichtungen 13, 15 am Aerosolfilter 1 angeordnet sein.

Für den Fall, dass (die) Filtermodule 2 nebeneinander angeordnet sind, kann auch vorgesehen sein, dass ein Strömungskanal 19 entlang der Vorderwand 4 oder der Rückwand 5 des Filtermoduls 2 oder der Filtermodule 2 für die genannten Zwecke angeordnet ist/sind.

Bei der Ausführungsvariante des Aerosolfilters 1 nach den Fig. 1 bis 3 kann also mit der Anordnung der "Bausteine" Filterelemente 10 und Strömungskanäle 19 eine relativ einfache Möglichkeit einer Modularität der Filtermodule 2 auf kleinem Raum erreicht werden. Es sei jedoch erwähnt, dass die Strömungsverbindung zwischen den Filtermodulen 2 auch anders (ohne die Leitvorrichtungsgehäuse 19) ausgeführt sein kann, beispielsweise über Schlauch-oder Rohrleitungen. Zumindest in diesem Fall können die Filtermodule 2 auch völlig ident ausgeführt sein.

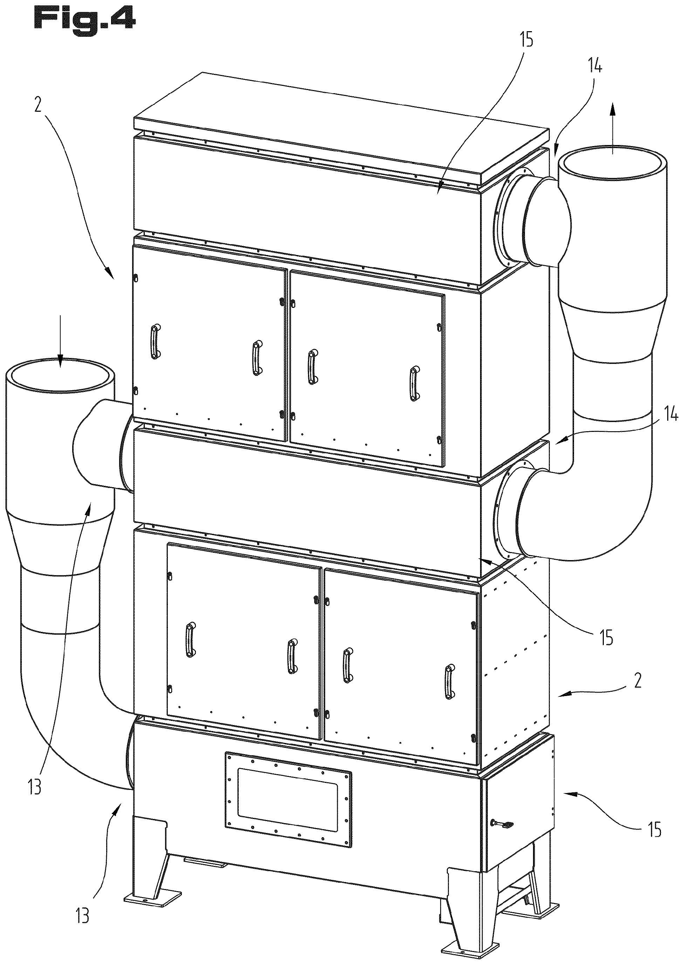

In Fig. 4 ist eine weitere und gegebenenfalls für sich eingeständige Ausführungsvariante des Aerosolfilters 1 dargestellt.

Der Aerosolfilter 1 weist wieder zwei oder mehrere Filtermodule 2 mit den darin angeordneten und nicht gezeigten Filterelementen 10 auf. Unterhalb, zwischen den und oberhalb ist jeweils ein Leitvorrichtungsgehäuse 15, gegebenenfalls mit einer Leitvorrichtung 16 im oberen und unteren Leitvorrichtungsgehäuse 15 (nicht gezeigt) angeordnet. Im mittleren Leitvorrichtungsgehäuse 15 ist eine Leitvorrichtung 16 angeordnet. Zu diesen Bestandteilen des Aerosolfilters 1 sei zur Vermeidung von Wiederholungen auf die voranstehenden Ausführungen dazu verwiesen.

Anders als bei der Ausführungsvariante des Aerosolfilters 1 nach den Fig. 1 bis 3 weisen bei dieser Ausführungsvariante die Filtermodule 2 keine Strömungskanäle 19 auf. Vielmehr erfolgt die Aufteilung des ungereinigten gasförmigen Mediums und die Vereinigung der gereinigten Gasströme außerhalb der Filtermodule 2 statt. Dazu weist sowohl das untere Leitvorrichtungsgehäuse 15 als auch das Leitvorrichtungsgehäuse 15 zwischen den beiden Filtermodulen 2 eine Zuführeinrichtung 13 für das ungereinigte gasförmige Medium auf, sodass also die Aufteilung des Gasstromes in mehrere, beispielsweis zwei, Teilströme bereits außerhalb der Filtermodule 2 und außerhalb der Leitvorrichtungsgehäuse 15 erfolgt.

Weiter weist sowohl das obere Leitvorrichtungsgehäuse 15 als auch das Leitvorrichtungsgehäuse 15 zwischen den Filtermodulen 2 je eine Abführeinrichtung 15 für die gereinigten gasförmige Mediumströme auf, die in weiterer Folge wie gezeigt außerhalb der Filtermodule 2 und außerhalb der Leitvorrichtungsgehäuse 15 vereinigt werden.

Anders ausgedrückt weisen die Zuführungsleitung des ungereinigten gasförmigen Mediums und die Abführungsleitung des gereinigten gasförmigen Mediums je zumindest eine Abzweigung auf, wie dies in Fig. 4 dargestellt ist.

Zur Vermeidung der Vermischung des ungereinigten gasförmigen Mediums mit dem gereinigten gasförmigen Medium im Leitvorrichtungsgehäuse 15 zwischen den beiden Filtermodulen 2 ist wiederum die Leitvorrichtung 16 (nicht gezeigt) in diesem Leitvorrichtungsgehäuse 15 vorgesehen.

Bei der in Fig. 4 gezeigten Ausführungsvariante des Aerosolfilters 1 ist weiter keine Umlenkung des gereinigten gasförmigen Mediums im oberen Leitvorrichtungsgehäuse 15 nach unten notwendig, wie dies bei der Ausführungsvariante des Aerosolfilters 1 nach den Fig. 1 bis 3 der Fall ist.

Diese Ausführungsvariante des Aerosolfilters 1 hat den Vorteil, dass durch die Vermeidung der Strömungskanäle 19 die Filtermodule 2 kleiner ausgeführt werden können oder diese bei gleichen Abmessungen wie bei der Ausführungsvariante mit Strömungskanälen 19 mit größeren Filterelementen 10 versehen werden können.

Im Übrigen sei auch zu dieser Ausführungsvariante angemerkt, dass der Aerosolfilter 1 mehr als zwei der gezeigten Filtermodule 2 aufweisen kann, wie diese voranstehend auch zur Ausführungsvariante des Aerosolfilters 1 nach den Fig. 1 bis 3 ausgeführt wurde. In diesem Fall können die Zuführeinrichtung 13 und die Abführeinrichtung 14 mit entsprechend mehr Abzweigungen ausgeführt werden. Weiter ist auch eine Mischvariante der Ausführungsvariante nach den Fig. 1 bis 3 und Fig. 4 möglich. Beispielsweise kann eine vertikale Aufteilung des ungereinigten gasförmigen Mediums entsprechend der Ausführungsvariante nach Fig. 4 und eine horizontale Aufteilung des ungereinigten gasförmigen Mediums entsprechend der Ausführungsvariante nach Fig. 1 bis 3 erfolgen. Gleiches gilt für die Abführung der gereinigten gasförmigen Medien.

Weiter kann generell nach einer Ausführungsvariante des Aerosolfilters 1 vorgesehen werden, dass bei sämtlichen Filtermodulen 2 der Einlass 8 für das verunreinigte gasförmige Medium unterhalb des zumindest einen Filterelements 10 und der Auslass 9 für das gereinigte gasförmige Medium oberhalb des zumindest einen Filterelements 10 angeordnet ist. Gleiches gilt für die Zuführeinrichtung(en) 13 und die Abführeinrichtung(en) 14, sodass vorzugsweise bei sämtlichen Filtermodulen 2 der jeweilige Teil der Zuführeinrichtung 13 für das verunreinigte gasförmige Medium unterhalb des jeweiligen zumindest einen Filterelements 10 und der jeweilige Teil der Abführeinrichtung 14 für das gereinigte gasförmige Medium oberhalb des jeweiligen zumindest einen Filterelements 10 angeordnet ist.

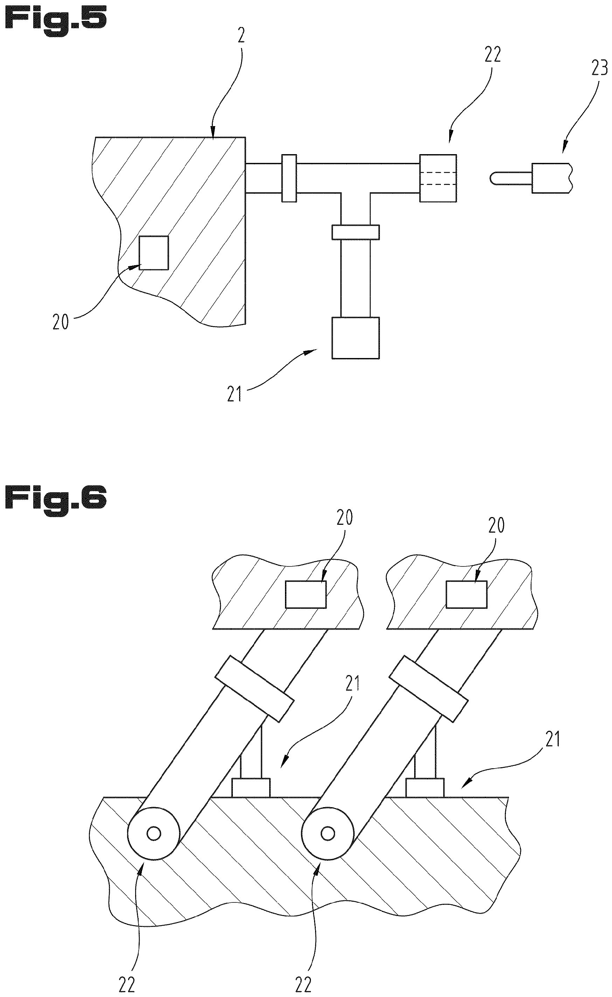

In Fig. 5 ist ein Ausschnitt aus einer weiteren Ausführungsvariante des Aerosolfilters 1 gezeigt. Konkret ist gezeigt, dass ein Messpunkt 20 an zumindest einem der Filtermodule 2 vorgesehen sein kann, der in Strömungsverbindung mit einem Sensor 21 zur Messung eines Betriebsparameters angeordnet ist, wobei der Messpunkt 20 bzw. die Strömungsverbindung zum Sensor 21 einen Anschluss 22 für ein Service Messgerät aufweist. Dazu kann z.B. in dieser Strömungsverbindung ein T- oder Y-Stück vorgesehen sein, das eine Strömungsverbindung zum Anschluss 22 ermöglicht. Der Anschluss 22 kann beispielsweise als Steckanschluss ausgeführt sein, z.B. mit einem Klinkenstecker. Andere Ausführungen sind ebenfalls möglich.

Nach einer Weiterbildung dazu, die in Fig. 6 gezeigt ist, besteht die Möglichkeit, dass an zumindest einem weiteren Filtermodul 2 zumindest ein weiterer Messpunkt 20 mit einer Strömungsverbindung zu einem weiteren Sensor 21 zur Messung eines Betriebsparameters angeordnet ist, wobei der weitere Messpunkt 20 einen weiteren Anschluss 22 für ein Service Messgerät 23 aufweist und wobei die Anschlüsse 22 für die Service Messgeräte 23 in einem gemeinsamen Bereich angeordnet sind.

Der Betriebsparameter kann beispielsweise ein Druck, ein Volumenstrom, Temperatur, Partikelanzahl, Partikelart, etc., sein. Als Partikel wird in diesem Zusammenhang nicht zwingend ein Feststoff verstanden.

Nur der Vollständigkeit halber sei angemerkt, dass zur Förderung des gasförmigen Mediums im System eine Gas-Fördereinrichtung, wie z.B. ein Gebläse oder ein Ventilator, angeordnet ist bzw. sein kann. Dieses kann Teil einer Luftaufbereitungsanlage sein oder nur für den Aerosolfilter 1 vorgesehen sein.

Der Aerosolfilter 1 kann mit weiteren Filtern, wie z.B. einem Feinfilter, kombiniert werden. Ebenso können weitere Geräte oder Anlagen mit dem Aerosolfilter 1 verbunden werden, wie beispielsweise ein Wärmetauscher, mit dem dem gasförmigen Medium Wärmeenergie entzogen wird, die z.B. für die Erwärmung einer Zuluft verwendet wird.

Obwohl im Voranstehenden nur der Aerosolfilter 1 an sich beschrieben wurde, umfasst die Erfindung auch ein Verfahren zur Abtrennung eines Feststoffes oder insbesondere einer Flüssigkeit aus einem Aerosol unter Einbeziehung des Aerosolfilters 1 nach der Erfindung.

Weiter kann der Anschluss 22 für ein Service Messgerät im Zusammenhang mit Filtervorrichtungen eine eigenständige Erfindung sein.

Die Ausführungsbeispiele zeigen bzw. beschreiben mögliche Ausführungsvarianten des Aerosolfilters 1, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus des Aerosolfilters 1 dieser bzw. dessen Bestandteile nicht notwendigerweise maßstäblich dargestellt sind.

### Bezugszeichenaufstellung

- 1: Aerosolfilter
- 2: Filtermodul
- 3: Gehäuse
- 4: Vorderwand
- 5: Rückwand

- 6: Seitenwand
- 7: Seitenwand
- 8: Einlass
- 9: Auslass
- 10: Filterelement

- 11: Filterelementaufnahme
- 12: Tür
- 13: Zuführeinrichtung
- 14: Abführeinrichtung
- 15: Leitvorrichtungsgehäuse

- 16: Leitvorrichtung
- 17: Standfuß
- 18: Deckelelement
- 19: Strömungskanal
- 20: Messpunkt

- 21: Sensor
- 22: Anschluss
- 23: Service Messgerät

## Patentansprüche

1. Aerosolfilter (1) umfassend ein Filtermodul (2) mit einem Gehäuse (3), das einen Einlass (8) für ein verunreinigtes gasförmiges Medium und einen Auslass (9) für ein gereinigtes gasförmiges Medium aufweist, wobei zwischen dem Einlass (8) und dem Auslass (9) zumindest ein Filterelement (10) zur Abscheidung eines Feststoffes oder einer Flüssigkeit aus dem gasförmigen Medium angeordnet ist, sowie mit einer Zuführeinrichtung (13) zur Zuführung des verunreinigten gasförmigen Mediums und einer Abführeinrichtung (14) zur Abführung des gasförmigen Mediums, **dadurch gekennzeichnet, dass** zwischen der Zuführeinrichtung (13) für die Zuführung des verunreinigten gasförmigen Mediums und der Abführeinrichtung (14) zur Abführung des gasförmigen Mediums übereinander und/oder nebeneinander mehrere der Filtermodule (2) angeordnet sind.

2. Aerosolfilter (1) nach Anspruch 1, **dadurch gekennzeichnet, dass** zwischen Filtermodulen (2) eine Leitvorrichtung (16) für die Mediumleitung angeordnet ist.

3. Aerosolfilter (1) nach Anspruch 2, **dadurch gekennzeichnet, dass** die Leitvorrichtung (16) in einem Leitvorrichtungsgehäuse (15) und dieses in mehrere voneinander getrennte Strömungswege unterteilend angeordnet ist.

4. Aerosolfilter (1) nach einem der Ansprüche 1 bis 3, **dadurch gekennzeichnet, dass** in zumindest einem der Gehäuse (3) der Filtermodule (2) ein an dem zumindest einen Filterelement (10) vorbeiführender Strömungskanal (19) angeordnet oder ausgebildet ist, mit dem ein Teil des verunreinigten Mediums in ein an dieses Filtermodul (2) anschließendes Filtermodul (2) geleitet wird.

5. Aerosolfilter (1) nach einem der Ansprüche 1 bis 4, **dadurch gekennzeichnet, dass** die Filterelemente (10) von übereinander angeordneten Filtermodulen (2) in horizontaler Richtung versetzt zueinander angeordnet sind.

6. Aerosolfilter (1) nach einem der Ansprüche 1 bis 5, **dadurch gekennzeichnet, dass** für sämtliche Filtermodule (2) nur eine einzige Zuführeinrichtung (13) für die Zuführung des verunreinigten gasförmigen Mediums und nur eine einzige Abführeinrichtung (14) zur Abführung des gasförmigen Mediums angeordnet ist.

7. Aerosolfilter (1) nach einem der Ansprüche 1 bis 6, **dadurch gekennzeichnet, dass** bei sämtlichen Filtermodulen (2) der Einlass (8) für das verunreinigte gasförmige Medium unterhalb des zumindest einen Filterelements (10) und der Auslass (9) für das gereinigte gasförmige Medium oberhalb des zumindest einen Filterelements (10) angeordnet ist.

8. Aerosolfilter (1) nach einem der Ansprüche 1 bis 7, **dadurch gekennzeichnet, dass** mehrere der oder alle Filtermodule (2) mehrere Filterelemente (10) aufweisen, die nebeneinander und/oder übereinander angeordnet sind.

9. Aerosolfilter (1) nach einem der Ansprüche 1 bis 8, **dadurch gekennzeichnet, dass** an zumindest einem der Filtermodule (2) ein Messpunkt (20) mit einem Sensor (21) zur Messung eines Betriebsparameters angeordnet ist, wobei der Messpunkt (20) mit einem Anschluss (22) für ein Service Messgerät (23) verbunden ist.

10. Aerosolfilter (1) nach Anspruch 9, **dadurch gekennzeichnet, dass** an zumindest einem weiteren Filtermodul (2) zumindest ein Messpunkt (20) mit einem Sensor (21) zur Messung eines Betriebsparameters angeordnet ist, wobei der Messpunkt (20) mit einem Anschluss (22) für ein Service Messgerät (23) verbunden ist und wobei alle Anschlüsse (22) für das Service Messgerät (23) in einem gemeinsamen Bereich angeordnet sind.
